Europäisches Patentamt

European Patent Office

Office européen des brevets

(19)

(11) Veröffentlichungsnummer: **0 004 673**
B1

(12) # EUROPÄISCHE PATENTSCHRIFT

(45) Veröffentlichungstag der Patentschrift: **23.12.81**

(21) Anmeldenummer: **79101053.1**

(22) Anmeldetag: **06.04.79**

(51) Int. Cl.³: **F 16 L 33/00, F 16 L 33/04**

(54) Schlaucharmatur.

(30) Priorität: 08.04.78 DE 7810551 U

(43) Veröffentlichungstag der Anmeldung:
17.10.79 Patentblatt 79/21

(45) Bekanntmachung des Hinweises auf die Patenterteilung:
23.12.81 Patentblatt 81/51

(84) Benannte Vertragsstaaten:
BE CH DE FR GB IT NL SE

(56) Entgegenhaltungen:
FR - E - 75 447

(73) Patentinhaber: Pahl'sche Gummi- und Asbest-
Gesellschaft "PAGUAG" GmbH & Co.
Am Gatherhof
D-4000 Düsseldorf 30 (DE)

(72) Erfinder: Braun, Alfred
Kolbergerstrasse 11
D-4005 Meerbusch 2 (DE)

(74) Vertreter: Dahlke, Werner, Dipl.-Ing. et al,
Frankenforster Strasse 137
D-5060 Bergisch Gladbach 3 (DE)

Courier Press, Leamington Spa, England.

EP 0 004 673 B1

Schlaucharmatur

Die Erfindung betrifft eine Schlaucharmatur für Universalschläuche, bestehend aus einem Stutzen aus elektrisch nicht leitfähigem Kunststoff, der an seinem einen Ende einen Verbindungsteil zum Zusammenwirken mit einem Befestigungselement aufweist und mit seinem anderen Ende in einem Schlauchende befestigt ist, wobei der Stutzen einen Einsatz in Form einer Metallhülse aufweist, die an ihrer Außenseite mit einem nicht ummantelten Bereich als elektrisch leitende Anlagefläche für das Schlauchende versehen ist und Durchtrittsöffnungen für das sie umgebende Kunststoffmaterial aufweist.

Bei einer bekannten Schlaucharmatur der genannten Art (FR—E 75.447) sind am Anschlußende der Schlaucharmatur nach innen gerichtete Kupplungsklauen vorgesehen, mit der die Armatur mit einem entsprechenden Kupplungsstück verbindbar ist. Zur Herstellung einer elektrischen Verbindung von einem Schlauch zu einem Anschlußstutzen bzw. zu einem anderen Schlauchende weist die Armatur eine metallische Hülse auf, die an ihrem in den Schlauch hineinragenden Ende eine im Umfangsbereich der Armatur an der Außenseite freiliegende Fläche aufweist, welche mit den Leitungsdrähten des Schlauches verbunden werden kann. Das andere Ende der Hülse ist als flexible Lippe ausgebildet, die an der Innenseite der Schlaucharmatur in kurzem Abstand vor den Kupplungsklauen aus dem Material der Armatur heraustritt. In diesem Bereich kann die Lippe der Hülse mit dem durch die Schläuche geförderten Medium in Berührung kommen, so daß eine solche Armatur nicht zur Leitung von aggressiven Medien, beispielsweise Säuren oder Laugen, verwendet werden kann.

Der Erfindung liegt die Aufgabe zugrunde, eine Schlaucharmatur zu schaffen, die gemeinsam mit Universalschläuchen bei der Förderung sämtlicher Medien verwendet werden kann, wobei sichergestellt sein soll, daß die Armatur durch die zu fördernden Medien nicht angegriffen wird, eine elektrostatische Aufladung verwieden werden kann und gleichzeitig keine wesentliche Verengung des Durchgangsquerschnitts verursacht wird.

Erfindungsgemäß wird diese Aufgabe dadurch gelöst, daß der Stutzen als Verbindungsteil einen radialen Außenflansch aufweist, daß die Metallhülse im Bereich des Außenflansches des Stutzens mit einem radial nach außen vorspringenden Flanschteil versehen ist, daß der Flanschteil der Hülse an seiner dem Hülsenkörper zugewandten Stirnseite in einem radial außenliegenden Bereich freiliegt und daß die Metallhülse im inneren Bereich des Stutzens, der mit dem durch den Schlauch geförderten Medium in Berührung kommt, vollständig mit dem Kunststoffmaterial des Stutzens ummantelt ist.

Bei der erfindungsgemäßen Schlaucharmatur werden die elektrisch leitfähigen Teile aus dem Leitungsbereich völlig herausgelegt, wobei sämtliche Kontakte an der Außenseite der Armatur vorgesehen sind. Durch diese Konstruktion ist es völlig ausgeschlossen, daß das zu fördernde Medium mit den leitenden Metallteilen der Armatur in Verbindung gelangt.

Vorzugsweise weist die Metallhüllse in ihrem mittleren Bereich einen zusätzlichen, nach außen gerichteten Flanschteil auf, dessen radial außenliegender Bereich freiliegt. Dabei kann die vom Stutzenflansch weggerichtete Stirnfläche des mittleren Hülsenflanschteils an der Stirnseite des Schlauches anliegen, wobei ein guter elektrisch leitender Kontakt zwischen dem Schlauch und dem Metallteil der Hülse geschaffen wird.

Darüber hinaus kann die zum Stutzenflansch weisende Stirnfläche des mittleren Hülsenflanschteils an einem nach innen gerichteten Flansch eine auf dem Schlauchende sitzenden Haltemanschette anliegen, Dadurch kann der elektrische Kontakt noch verbessert werden.

Die den Metalleinsatz umgebende Ummantelung kann aus dem gleichen Material bestehen wie die Innenschicht des mit diesem zu verbindenden Schlauches, beispielsweise aus Polyäthylen, vernetztem Polyäthylen, Polyvinylchlorid, Polyamid oder einem anderen lösungsmittel und schemikalienbeständigen Material. Auf diese Weise kann die erfindungsgemäße Schlaucharmatur an alle möglichen Anwendungsfälle angepaßt werden.

Die Erfindung ist in der Zeichnung beispielsweise veranschaulicht und im nachstehenden im einzelnen anhand der Zeichnung beschrieben. Es zeigen:

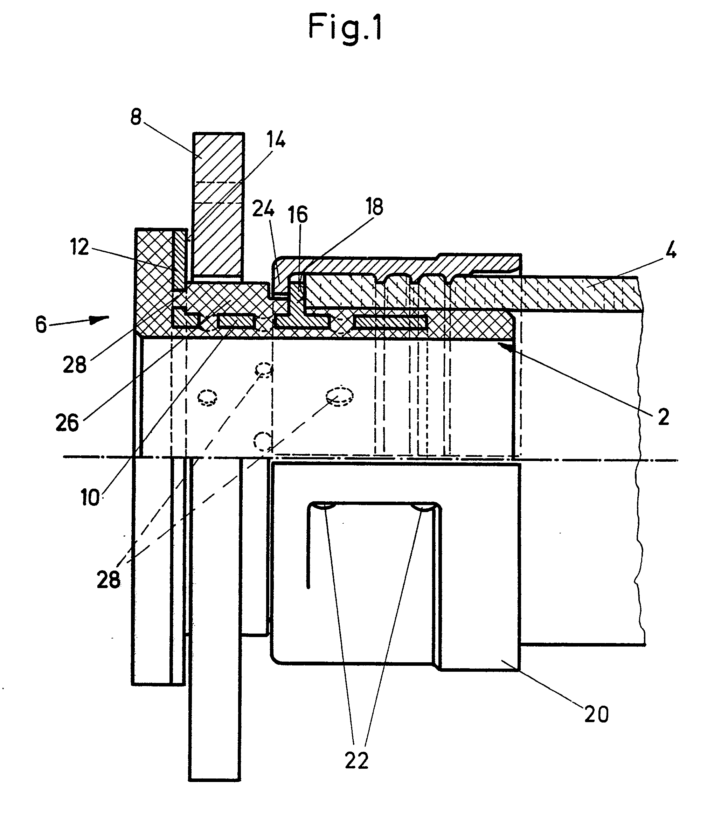

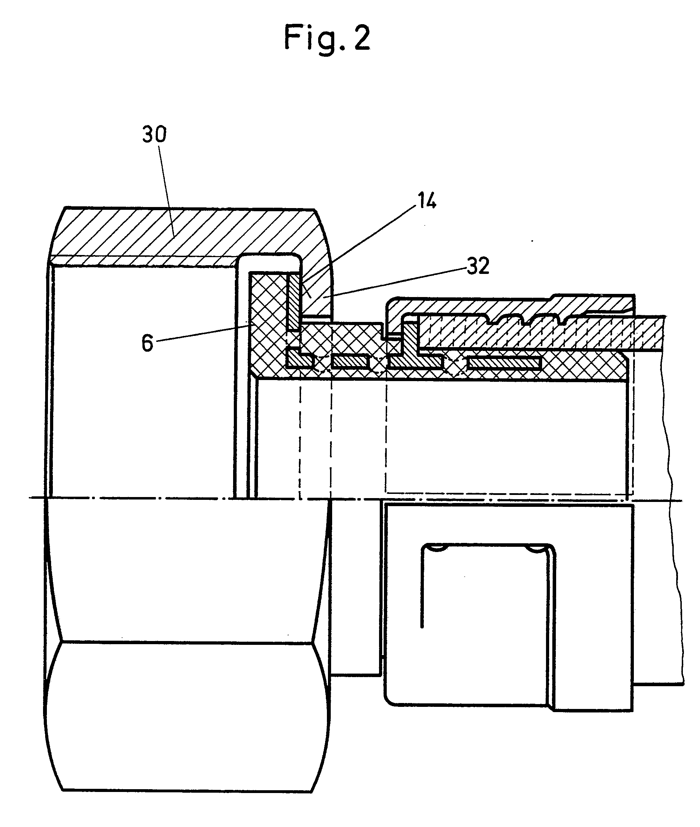

Fig. 1 einen Schnitt durch eine mit einem Schlauchende verbundene Armatur, die über einen Losflansch mit einem Nachbarteil verbindbar ist, und Fig. 2 die gleiche Schlaucharmatur wie Fig. 1, wobei als Befestigungselement zu einem Nachbarteil eine · Überwurfmutter vorgesehen ist.

Nach der Zeichnung besteht die Schlaucharmatur im wesentlichen aus einem Stutzen 2, der in den freien Querschnitt eines Schlauchendes 4 eingesteckt werden kann. Der aus dem Schlauchende 4 herausragende Abschnitt des Stutzens 2 ist an seinem Ende mit einem nach außen gerichteten Verbindungsflansch 6 versehen, mit welchem die Armatur unter Zuhilfenahme eines Losflansches 8 mit einer zweiten Armatur oder dergleichen verbindbar ist.

Der Stutzen 2 weist einen hülsenförmigen Metalleinsatz 10 auf, der mit dem gleichen Material wie die Innenschicht des Schlauchs 4 weitgehend ummantelt ist. Auf der Seite des Verbindungsflansches 6 weist der Metalleinsatz 10 einen Flanschteil 12 auf, der den gleichen Außendurchmesser wie der Verbindungsflansch 6 hat. Dieser Flanschteil 12 ist in seinem Fußbereich beidseitig von dem Stutzenmaterial umgeben. In seinem radial außen liegenden Bereich liegt die Ummantelung lediglich an der Außenfläche an, während die Innenfläche 14 freiliegt und im Befestigungszustand unmittelbar mit der entsprechenden Stirnfläche des metallenen Losflansches 8 in Berührung kommt.

Etwa auf halber Länge ist der hülsenförmige Metalleinesatz 10 mit einem weiteren Flanschteil 16 versehen, der jedoch einen kleineren Durchmesser aufweist als der am Hülsenende vorgesehene Flansch 12, so daß das Aufstecken des Losflansches 8 sichergestellt ist. Der mittlere Flanschteil 16 ist in seinem Fußbereich von dem Material des Stutzens umgeben, jedoch liegt der radial äußere Flanschbereich auf beiden Stirnseiten völlig frei. Die eine freie Stirnfläche dient als Anlage für die freie Stirnfläche 18 des Schlauchendes 4, so daß eine elektrische Verbindung zwischen den elektrisch leitfähigen Deckmaterialien des Schlauchendes 4 oder in den Schlauchverband eingearbeiteten Kupferlitzen einerseits und dem Metalleinsatz 10 andererseits zustande kommt.

Zum Andrücken des Schlauchendes 4 an den Stutzen 2 dient eine aus zwei Halbschalen bestehende Haltemanschette 20, die mit Hilfe von Schrauben 22 fest auf den Schlauch geschraubt werden kann. Diese Manschette weist einen nach innen gerichteten Flansch 24 auf, der im befestigten Zustand der Manschette an der gegenüberliegenden freien Fläche des Flanschteils 16 der Metallhülse 10 anliegt.

Der sich daran anschließende, sich bis zum Verbindungsflansch 6 erstreckende Bereich 26 des Stutzens 2 weist gegenüber dem in das Schlauchende 4 gesteckten Bereich einen größeren Außendurchmesser auf, so daß die Festigkeit dieses besonders stark beanspruchten Abschnitts erhöht werden kann, ohne daß dadurch der freie Durchgangsquerschnitt der Armatur beeinträchtigt wird.

Obgleich das Stutzenmaterial gut an dem Metalleinsatz 10 haftet, können zur Verbesserung des Zusammenhalts Durchtrittsöffnungen 28 in dem Metalleinsatz vorgesehen sein, durch welches das Ummantelungsmaterial hindurchgreift.

Bei dem in Fig. 2 dargestellten Ausführungsbeispiel sind an der Schlaucharmatur die gleichen Merkmale verwirklicht wie bei dem in Fig. 1 dargestellten Ausführungsbeispiel. Bei diesem Ausführungsbeispiel ist jedoch anstelle des zur Verbindung dienenden Losflansches 8 eine Überwurfmutter 30 vorgesehen, die mit einem nach innen gerichteten Flansch 32 an der metallenen Stirnfläche 14 des Verbindungsflansches 6 anliegt.

Das in den beiden Ausführungsbeispielen veranschaulichte Prinzip läßt sich selbstverständlich auch auf anders gestaltete Armaturen bzw. Schlauchverbinder anwenden.

**Patentansprüche**

1. Schlaucharmatur für Universalschläuche, bestehend aus einem Stutzen (2) aus elektrisch nicht leitfähigem Kunststoff, der an seinem einen Ende einen Verbindungsteil (6) zum Zusammenwirken mit einem Befestigungselement (8; 30, 32) aufweist und mit seinem anderen Ende in einem Schlauchende (4) befestigbar ist, wobei der Stutzen (2) einen Einsatz (10) in Form einer Metallhülse aufweist, die an ihrer Außenseite mit einem nichtummantelten Bereich (16) als elektrisch leitende Anlagefläche für das Schlauchende (4) versehen ist und Durchtrittsöffnungen (28) für das sie umgebende Kunststoffmaterial aufweist, dadurch gekennzeichnet, daß der Stutzen (2) als Verbindungsteil einen radialen Außenflansch (6) aufweist, daß die Metallhülse (10) im Bereich des Außenflansches (6) des Stutzens (2) mit einem radial nach außen vorspringenden Flanschteil (12) versehen ist, daß der Flanschteil (12) der Hülse an seiner dem Hülsenkörper zugewandten Stirnseite (14) in einem radial außenliegenden Bereich freiliegt und daß die Metallhülse im inneren Bereich des Stutzens (2), der mit dem durch den Schlauch geförderten Medium in Berührung kommt, vollständig mit dem Kunststoffmaterial des Stutzens unmantelt ist.

2. Schlaucharmatur nach Anspruch 1, dadurch gekennzeichnet, daß die Metallhülse (10) in ihrem mittleren Bereich einen zusätzlichen, nach außen gerichteten Flanschteil (16) aufweist, dessen radial außenliegender Bereich freiliegt.

3. Schlaucharmatur nach Anspruch 2, dadurch gekennzeichnet, daß die vom Stutzenflansch (6) weg gerichtete Stirnfläche des mittleren Hülsenflanschteils (16) an der Stirnseite (18) des Schlauchendes (4) anliegt.

4. Schlaucharmatur nach Anspruch 2 oder 3, dadurch gekennzeichnet, daß die zum Stutzenflansch (6) weisende Stirnfläche des mittleren Hülsenflanschteils (16) an einem nach innen gerichteten Flansch (24) einer auf de Schlauchende (4) sitzenden Haltemanschette (20) anliegt.

5. Schlaucharmatur nach einem der Ansprüche 1 bis 4, dadurch gekennzeichnet, daß die den Metalleinsatz (10) umgebende Ummantelung aus dem gleichen Material besteht wie die Innenschicht des mit diesem zu verwendenden Schlauches.

6. Schlaucharmatur nach einem der Ansprüche 1 bis 5, dadurch gekennzeichnet, daß die den Metalleinsatz (10) umgebende Ummantelung aus Polyäthylen, vernetztem Polyäthylen, Polyvinylchlorid, Polyamid oder einem anderen lösungsmittel- und chemikalienbeständigen Material besteht.

## Revendications

1. Accessoire pour tuyaux flexibles universels, se composant d'un raccord (2) en matière synthétique non conductrice de l'électricité qui comporte, à l'une de ses extrémités, un élément d'assemblage (6) destiné à coopérer avec un élément de fixation (8; 30, 32) et qui est fixé par son autre extrémité dans l'extrémité (4) d'un tuyau flexible, le raccord (2) présentant une garniture (10) sous forme d'une douille métallique qui comporte, du côté extérieur, une zone non enrobée (16) servant de surface portante électriquement conductrice pour l'extrémité (4) du tuyau flexible et qui est percée d'ouvertures traversantes (28) pour la matière synthétique qui l'enrobe, caractérisé en ce que le raccord (2) comporte, en tout qu'élément d'assemblage, une bride extérieure radiale (6), en ce que la douille métallique (10) est munie, dans la région de la bride extérieure (6) du raccord (2), d'une partie en forme de bride (12) faisant saillie vers l'extérieur en direction radiale, en ce que la partie (12) de la douille en forme de bride est dénudée, sur sa face frontale (14) dirigée vers le corps de la douille, dans une zone située à l'extérieur en direction radiale, et en ce que dans la région interne du raccord (2), qui entre en contact avec le fluide transporté par le tuyau flexible, la douille métallique est complètement enrobée par la matière synthétique du raccord.

2. Accessoire pour tuyaux flexibles selon la revendication 1, caractérisé en ce que la douille métallique (10) présente, dans sa région moyenne, une partie supplémentaire en forme de bride (16) dirigée vers l'extérieur, dont la région située à l'extérieur en direction radiale est dénudée.

3. Accessoire pour tuyaux flexibles selon la revendication 2, caractérisé en ce que la face frontale de la partie moyenne en forme de bride (16) de la douille, dirigée à l'opposé de la bride (6) du raccord, est appliquée contre la face frontale (18) de l'extrémité (4) du tuyau flexible.

4. Accessoire pour tuyaux flexibles selon la revendication 2 ou 3, caractérisé en ce que la face frontale de la partie moyenne en forme de bride (16) de la douille, dirigée vers la bride (6) du raccord, est appliquée contre un rebord (24) dirigé vers l'intérieur que présente un manchon de retenue (20) fixé à l'extrémité (4) du tuyau flexible.

5. Accessoire pour tuyaux flexibles selon l'une quelconque des revendications 1 à 4, caractérisé en ce que le revêtement qui enrobe la garniture métallique (10) est fait de la même matière que la couche intérieure du tuyau flexible destiné à être utilisé avec cette garniture.

6. Accessoire pour tuyaux flexibles selon l'une quelconque des revendications 1 à 5, caractérisé en ce que le revêtement qui enrobe la garniture métallique (10) est fait de polyéthylène, de polyéthylène réticulé, de chlorure de polyvinyle, de polyamide ou d'une autre matière résistante aux solvants et aux produits chimiques.

## Claims

1. Hose fitting for universal hoses, consisting of a nozzle (2) which is composed of an electrically non-conductive plastic and has at one of its ends a connecting part (6) for interaction with a fixing element (8; 30, 32) and can be fixed with its other end in the end (4) of a hose, the nozzle (2) having an insert (10) in the form of a metal sleeve which is provided on its outside with an un-sheathed zone (16) as an electrically conductive contact surface for the end (4) of the hose and has passage orifices (28) for the plastic material surrounding the sleeve, characterised in that the nozzle (2) has a radial outer flange (6) as a connecting part, that the metal sleeve (10) is provided in the zone of the outer flange (6) of the nozzle (2) with a radially outward-projecting flange part (12), that the flange part (12) of the sleeve, on its end face (14) pointing towards the sleeve body, is exposed in a radially outer zone and that the metal sleeve which, in the inner zone of the nozzle (2), comes into contact with the medium delivered through the hose is completely sheathed by the plastic material of the nozzle.

2. Hose fitting according to Claim 1, characterised in that the metal sleeve (10) has, in its central zone, an additional, outward-pointing flange part (16), the radially outer zone of which is exposed.

3. Hose fitting according to Claim 2, characterised in that the end face, pointing away from the nozzle flange (6), of the central part (16) of the sleeve flange bears against the end face (18) of the end (4) of the hose.

4. Hose fitting according to Claim 2 or 3, characterised in that the end face, pointing towards the nozzle flange (6), of the central part (16) of the sleeve flange bears against an inward-facing flange (24) of a holding collar (20) seated on the end (4) of the hose.

5. Hose fitting according to one of Claims 1 to 4, characterised in that the sheathing which surrounds the metal insert (10) consists of the same material as the inner layer of the hose to be used together with this metal insert.

6. Hose fitting according to one of Claims 1 to 5, characterised in that the sheathing which surrounds the metal insert (10) consists of polyethylene, cross-linked polyethylene, polyvinyl chloride, polyamide or another material which is resistant to solvents and chemicals.

# Fig.1

# Fig. 2